# EUROPÄISCHE PATENTSCHRIFT

(11) **EP 2 044 459 B1**
(45) Veröffentlichungstag und Bekanntmachung des Hinweises auf die Patenterteilung: **27.02.2013**
(21) Anmeldenummer: 07730130.7
(22) Anmeldetag: 13.06.2007
(51) Int. Cl.: G01S 13/34, G01S 7/35, G01S 13/93

(54) **WINKELAUFLÖSENDER RADARSENSOR**
ANGULAR RESOLVING RADAR SENSOR
DÉTECTEUR RADAR À RÉSOLUTION ANGULAIRE

(30) Priorität: 13.07.2006 DE 102006032540
(43) Veröffentlichungstag der Anmeldung: 08.04.2009
(73) Patentinhaber: Robert Bosch GmbH, 70442 Stuttgart (DE)
(72) Erfinder: HILSEBECHER, Joerg, 31135 Hildesheim (DE); STEFFENS, Wolf, 71083 Herrenberg (DE)
(86) Internationale Anmeldenummer: PCT/EP2007/055838
(87) Internationale Veröffentlichungsnummer: WO 2008/006656

(56) Entgegenhaltungen:
- WO-A-03/081278
- WO-A-2005/062071
- DE-A1- 10 355 796
- US-A1- 2002 175 859

## Beschreibung

### Stand der Technik

Die Erfindung betrifft einen Radarsensor mit einer Linse und mehreren in der Brennebene der Linse angeordneten Antennenelementen zum Senden und Empfangen von Radarsignalen, wobei die Antennenelemente mit unterschiedlichem Versatz zur optischen Achse der Linse angeordnet sind, sodass die von ihnen erzeugten Radarstraheln von der Linse gebündelt und in unterschiedliche Richtungen abgestrahlt werden, einem zugehörigen Sende- und Empfangsteil, das dazu ausgebildet ist, den Antennenelementen parallel Sendesignale zuzuführen, deren Frequenzen gegeneinander versetzt sind, und ein Zwischenfrequenzsignal für jeden Kanal zu bilden, indem es das von dem betreffenden Antennenelement empfangene Signal mit einem Basissignal mischt, und mit einer Auswerteeinrichtung.

Bei den Antennenelementen kann es sich beispielsweise um einzelne Antennen oder Patches handeln. Die Richtcharakteristik jedes Antennenelements, speziell die Richtung in der größten Strahlenintensität bzw. der größten Empfindlichkeit, ist dann durch den Versatz des betreffenden Elements gegenüber der optischen Achse gegeben. Zum Senden und zum Empfang der Radarsignale können dieselben Antennenelemente oder wahlweise auch getrennte Antennenelemente benutzt werden.

Radarsensoren werden beispielsweise in sogenannten ACC-Systemen (Adaptive Cruise Control) für Kraftfahrzeuge eingesetzt und dienen dann dazu, die Abstände und Relativgeschwindigkeiten vorausfahrender Fahrzeuge zu messen, so daß eine adaptive Abstands- und Geschwindigkeitsregelung ermöglicht wird. Die Bestimmung der Azimutwinkel der georteten Objekte dient dann beispielsweise dazu, zwischen vorausfahrenden Fahrzeugen auf der eigenen Spur und Fahrzeugen auf Nebenspuren zu unterscheiden.

Als Beispiel für einen solchen Radarsensor beschreibt EP 1 380 854 A2 ein statisches FMCW-Mehrstrahlradar. Der Begriff "statisch" bedeutet in dem Zusammenhang, daß die Richtungen der von den einzelnen Antennenelementen erzeugten Radarstrahlen zeitlich unveränderlich sind, so daß durch parallele Auswertung der von den einzelnen Antennenelementen gelieferten Signale der gesamte Ortungswinkelbereich des winkelauflösenden Radarsensors simultan überwacht werden kann.

Bei einem FMCW-Radar (Frequency Modulated Continuous Wave) ist die Frequenz der den einzelnen Antennenelementen zugeführten Sendesignale rampenförmig moduliert. Das von jedem einzelnen Antennenelement empfangene Signal wird mit dem Sendesignal gemischt, das diesem Antennenelement zugeführt wird. Auf diese Weise erhält man ein Zwischenfrequenzsignal, dessen Frequenz den Frequenzunterschied zwischen dem gesendeten Signal und dem empfangenen Signal angibt. Dieser Frequenzunterschied ist aufgrund des Doppler-Effekts von der Relativgeschwindigkeit des georteten Objekts abhängig, ist jedoch aufgrund der Modulation des gesendeten Signals auch von der Signallaufzeit und damit vom Abstand des Objekts abhängig.

Die Zwischenfrequenzsignale werden digitalisiert und über eine Zeitspanne, die etwa einer einzelnen Frequenzrampe entspricht, aufgezeichnet. Der so erhaltene Signalverlauf wird dann durch Schnelle Fouriertransformation in sein Frequenzspektrum zerlegt. In diesem Spektrum zeichnet sich jedes geortete Objekt durch einen einzelnen Peak ab, dessen Frequenzlage vom Abstand und der Relativgeschwindigkeit des betreffenden Objekts abhängig ist. Wenn die gesendeten Signale abwechselnd mit Frequenzrampen mit unterschiedlichen Rampensteigungen moduliert werden, beispielsweise mit einer steigenden und einer fallenden Rampe, so lassen sich für ein einzelnes Objekt aus der Lage der Peaks in den für die beiden Rampen erhaltenen Spektren der Abstand und die Relativgeschwindigkeit des Objekts eindeutig bestimmen. Wenn mehrere Objekte gleichzeitig geortet werden, so ist für eine eindeutige Zuordnung der Peaks zu den jeweiligen Objekten eine Modulation der gesendeten Signale mit mindestens einer weiteren Frequenzrampe erforderlich.

Für jeden Kanal, d. h., für jedes Antennenelement, erhält man auf jeder Frequenzrampe ein Spektrum, in dem sich die georteten Objekte in der Form eines Peaks abzeichnen. Für die zu einem einzelnen Objekt gehörenden Peaks ist dabei die Amplitude und Phase des Zwischenfrequenzsignals, beispielsweise am Scheitel des Peaks, von Kanal zu Kanal etwas verschieden. Die Unterschiede in der Amplitude und Phase, zusammenfassend auch als komplexe Amplitude bezeichnet, resultieren aus den unterschiedlichen Richtcharakteristiken der Antennenelemente und sind vom Azimutwinkel des betreffenden Objekts abhängig.

Für jedes einzelne Antennenelement zeigt die komplexe Amplitude eine charakteristische Abhängigkeit vom Azimutwinkel, die sich in einem Antennendiagramm darstellen läßt. Der Abstand und die Relativgeschwindigkeit des Objekts geht in die komplexe Amplitude nur in der Form eines Phasenfaktors ein, der für alle Kanäle gleich ist. Durch Vergleich der komplexen Amplituden in den verschiedenen Kanälen läßt sich daher der Azimutwinkel des betreffenden Objekts bestimmen. Vereinfacht gesagt wird dazu der Azimutwinkel gesucht, bei dem die jeweils am Scheitel des Peaks gemessenen komplexen Amplituden am besten zu den zugehörigen Antennendiagrammen passen. Bei dem in EP 1 380 854 A2 beschriebenen Radarsensor wird zur Verbesserung der Winkelauflösung die komplexe Amplitude nicht nur am Scheitel des jeweiligen Peaks, sondern bei mehreren in der Nähe dieses Scheitels liegenden Frequenzen ausgewertet.

Bei dem bekannten Radarsensor wird sämtlichen Antennenelementen dasselbe frequenzmodulierte Sendesignal zugeführt. Als Beispiel kann angenommen werden, daß zum Senden und für den Empfang dieselben Antennenelemente verwendet werden. Jedes Antennenelement empfängt dann ein Radarecho nicht nur von dem von ihm selbst gesendeten Signal, sondern auch von den von den anderen Antennenelementen gesendeten Signalen. All diese Signale haben, sofern sie von demselben Objekt stammen, dieselbe Frequenz und überlagern sich am empfangenden Antennenelement zu einem Summensignal. Wenn nun beispielsweise zwei Objekte, die sich in ihrem Azimutwinkel unterscheiden, aber den gleichen Abstand und die gleiche Relativgeschwindigkeit haben, lassen sich ihre Singale im Spektrum nicht mehr trennen, so daß der Radarsensor die unterschiedlichen Azimutwinkel der beiden Objekte nicht auflösen kann.

Ein weiterer Effekt, der das Winkelauflösungsvermögen des bekannten Radarsensors beeinträchtigt, ergibt sich daraus, daß die einzelnen Antennenelemente aufgrund von Beugungs- und Interferenzeffekten keine scharf gebündelten Strahlen, sondern vielmehr relativ weit aufgefächerte Radarkeulen erzeugen. Typischerweise bilden sich neben einer Hauptkeule auch zwei oder mehr Nebenkeulen. Diese können insbesondere auch durch Kopplung mit den von anderen Antennenelementen gesendeten frequenzgleichen Signalen entstehen.

Ein Radarsensor nach dem Oberbegriff des Anspruchs 1 ist aus DE 103 55 796 A1 bekannt. Aus WO 03/081278 A und WO 2005/062071 A1 ist es bekannt, das Winkelauflösungsvermögen durch Auswertung von Kreuzechos zwischen verschiedenen Antennenelementen zu verbessern.

### Offenbarung der Erfindung

Aufgabe der Erfindung ist es, einen Radarsensor zu schaffen, der bei einfachem Aufbau ein verbessertes Winkelauflösungsvermögen aufweist.

Diese Aufgabe wird erfindungsgemäß bei einem Radarsensor der eingangs genannten Art dadurch gelöst, daß die Auswerteeinrichtung dazu ausgebildet ist, Azimutwinkel von georteten Objekten anhand einer Beziehung zwischen den von verschiedenen Antennenelementen empfangenen Signalen zu bestimmen und dabei anhand des Frequenzversatzes zwischen Signalen zu unterscheiden, die von verschiedenen Antennenelementen gesendet wurden, daß Basissignal eine Frequenz hat, die höchstens gleich der kleinsten der den verschiedenen Antennenelementen zugeführten Sendefrequenzen ist, und daß für mindestens eines der Antennenelemente der Frequenzversatz so groß ist, daß das Spektrum des Zwischenfrequenzsignals für alle georteten Objekte, unabhängig von deren Relativgeschwindigkeit, im positiven Frequenzbereich liegt.

Durch den Frequenzversatz werden die von den verschiedenen Antennenelementen gesendeten Signale voneinander entkoppelt, so daß Kopplungen zwischen diesen Signalen nicht mehr zur Entstehung von Nebenkeulen beitragen können.

Ein weiterer wesentlicher Vorteil besteht darin, daß in dem von einem einzelnen Antennenelement empfangenen Signal aufgrund des Frequenzversatzes zwischen dem Signalanteil, der von diesem Antennenelement selbst gesendet wurde, und den von anderen Antennenelementen gesendeten Signalanteilen unterschieden werden kann. So erhält man beispielsweise für ein einzelnes Radarobjekt, das sich im Überlappungsbereich zweier Radarkeulen befindet, nunmehr im Spektrum jedes der beiden zugehörigen Kanäle zwei Peaks, von denen einer das direkte Echo repräsentiert, d. h., das Signal, das von dem betreffenden Antennenelement gesendet und auch von diesem wieder empfangen wurde, während der andere Peak das sogenannte Kreuzecho repräsentiert, das von dem anderen Antennenelement gesendet wurde. Der Frequenzunterschied zwischen diesen beiden Peaks entspricht dem Frequenzversatz zwischen den gesendeten Signalen. Wenn man die komplexen Amplituden beispielsweise nur am Scheitel jedes Peaks auswertet, erhält man folglich bei dem erfindungsgemäßen Radarsensor von den beiden beteiligten Antennenelementen insgesamt vier komplexe Amplituden, im Vergleich zu nur zwei komplexen Amplituden bei dem herkömmlichen Sensor. Für die Bestimmung des Azimutwinkels steht somit eine wesentlich größere Anzahl an Meßwerten zur Verfügung, wodurch das Winkelauflösungsvermögen deutlich verbessert wird. Insbesondere ist es nun auch bei Auswertung der Signale von nur zwei Radarkeulen möglich, zwei winkelversetzte Objekte aufzulösen, die denselben Abstand und dieselbe Relativgeschwindigkeit haben.

Insgesamt wird so eine deutliche Verbesserung des Winkelauflösungsvermögens erreicht, ohne daß die Apertur und damit die Abmessungen des Sensors vergrößert werden müssen und ohne daß die Komplexität des Sensoraufbaus nennenswert zunimmt. Auf der Senderseite werden lediglich zusätzliche Einrichtungen benötigt, die den Frequenzversatz zwischen den gesendeten Signalen bewirken, und empfangsseitig wird eine etwas größere Bandbreite benötigt, damit das Spektrum in einem Frequenzbereich ausgewertet werden kann, der die von mehreren Antennenelementen gesendeten Frequenzen einschließt.

Aus dem Umstand, daß bei mindestens einem Antennenelement die Sendefrequenz erhöht ist, ergibt sich noch der folgende zusätzliche Vorteil: Die Lage des von einem Radarobjekt erzeugten Signals im Frequenzspektrum ist, wie oben erläutert wurde, von der Relativgeschwindigkeit des Objekts abhängig und kann daher bei bestimmten Relativgeschwindigkeiten auch in den sogenannten DC-Bereich des Spektrums, d. h., in den Frequenzbereich in der Umgebung der Frequenz null, verschoben sein oder gar in den Bereich negativer Frequenzen. Signalanteile im DC-Bereich können mit herkömmlichen FMCW-Radarsensoren nicht detektiert bzw. nicht ausgewertet werden. Positive und negative Frequenzen unterscheiden sich in dem komplexen Zwischenfrequenzsignal Z = |A|e^{ift} durch das Vorzeichen der Frequenz f. Da jedoch beim herkömmlichen FMCW-Verfahren letztlich nur der Absolutbetrag des Realteils des Zwischenfrequenzsignals ausgewertet wird, kann zwischen positiven und negativen Frequenzen nicht unterschieden werden, so daß es zu einer Verfälschung des Meßergebnisses kommen kann, wenn nennenswerte Signalanteile im negativen Spektralbereich liegen. Bei dem erfindungsgemäßen FMCW-Radar wird das Zwischenfrequenzsignal für jeden Kanal dadurch gebildet, daß das von dem betreffenden Antennenelement empfangene Signal mit einem Basissignal gemischt wird, dessen Frequenz höchstens gleich der kleinsten der den verschiedenen Antennenelementen zugeführten Sendefrequenzen ist. Mindestens für einen der Kanäle ist deshalb das Signal im Spektrum um den Frequenzversatz zu positiven Frequenzen verschoben, so daß das gesamte Signal oder zumindest ein größerer Anteil desselben nun in dem auswertbaren positiven Frequenzbereich liegt.

Vorteilhafte Ausgestaltungen der Erfindung ergeben sich aus den Unteransprüchen.

Bevorzugt ist der Radarsensor als FMCW-Radar aufgebaut.

Gemäß einer Ausführungsform des Radarsensors sind die einzelnen Antennenelemente (gegebenenfalls mit Ausnahme eines ersten Antennenelements) über jeweilige Frequenzverschiebestufen mit einem gemeinsamen Oszillator verbunden, der das Basisfrequenzsignal erzeugt. Dieses Basisfrequenzsignal wird dann in den Frequenzverschiebestufen um den jeweils gewünschten Frequenzversatz angehoben. Das Basisfrequenzsignal wird zugleich den Mischern zugeführt, die aus den von den verschiedenen Antennenelementen empfangenen Signalen die entsprechenden Zwischenfrequenzsignale bilden.

Gemäß einer anderen Ausführungsform ist jedem Antennenelement ein eigener Oszillator zur Erzeugung des Sendesignals zugeordnet.

Da es für eine verbesserte Winkelauflösung genügt, daß die Sendesignale aller Antennenelemente entkoppelt sind und das Kreuzecho jeweils für eines der an diesem Kreuzecho beteiligten Antennenelemente ausgewertet wird, läßt sich ein vereinfachter, kostengünstiger Aufbau dadurch erreichen, daß für einige Kanäle, z. B. diejenigen, die der äußersten linken und äußersten rechten Radarkeule entsprechen, das Zwischenfrequenzsignal wie üblich durch Mischen des empfangenen Signals mit dem tatsächliche von dem betreffenden Antennenelement gesendeten Signal gebildet wird, so daß die Frequenz des Zwischenfrequenzsignals nicht angehoben ist. Zwar können dann in diesen Kanälen keine Kreuzechos detektiert werden, doch steht dem als Vorteil ein erzeugt so ein Zwischenfrequenzsignal, dessen Frequenz dem Frequenzunterschied zwischen dem gesendeten Signal und dem empfangenen Signal im Kanal 1 entspricht.

In einer Auswerteeinrichtung 24 wird das vom Mischer 22 gelieferte Zwischenfrequenzsignal in einem Analog/DigitalWandler A/D digitalisiert und dann in einer Speichereinrichtung 26 als Funktion der Zeit (Z1(t)) aufgezeichnet. Durch Schnelle Fouriertransformation wird aus der Funktion Z1(t) das Spektrum S1(f) berechnet, d.th. eine Funktion, die die komplexe (durch Betrag und Phase gegebene) Amplitude des Zwischenfrequenzsignals in Abhängigkeit von der Frequenz f angibt.

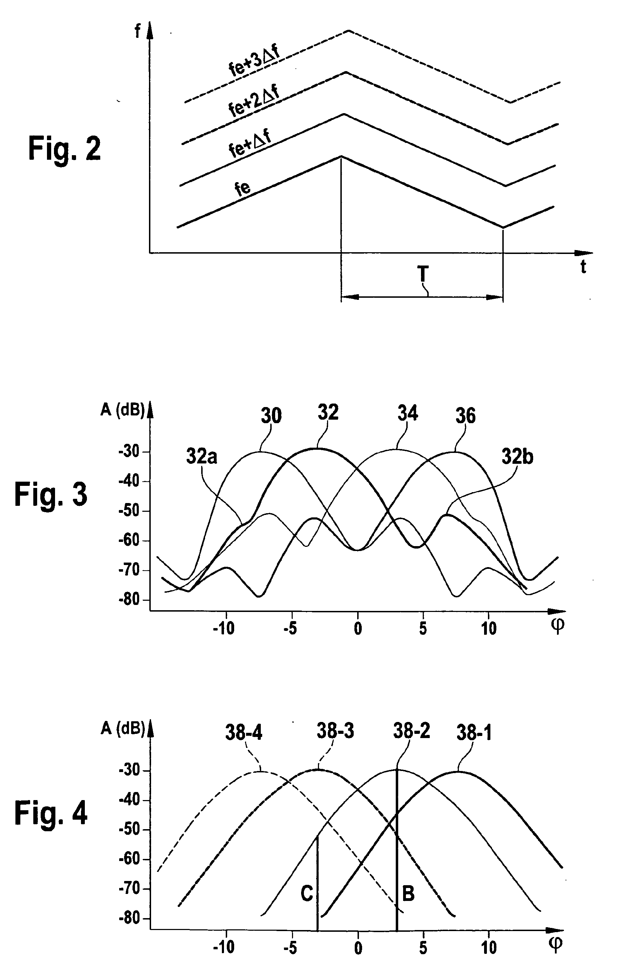

Die Basisfrequenz fe des vom Oszillator 18 gelieferten Signals ist rampenförmig moduliert, wie vereinfacht durch die untere Kurve in Figur 2 dargestellt wird. Eine einzelene steigende oder fallende Rampe hat die Dauer T. Dies entspricht auch der Zeit, über welche die Funktion Z1(t) aufgezeichnet wird.

Wenn der zu Kanal 1 gehörende Radarstrahl auf ein Objekt trifft und wieder zum Radarsensor reflektiert wird, so weist das reflektierte Signal eine Frequenzverschiebung auf, die sich aus einem von der Relativgeschwindigkeit des Objekts abhängigen Doppler-Anteil und einen abstandsabhängigen Laufzeit-Anteil zusammensetzt. Der Laufzeit-Anteil ist proportional zur Signallaufzeit und zur Steigung der Frequenzrampe. Das Spektrum S1(f) des Zwischenfrequenzsignals weist folglich einen Spitzenwert oder "Peak" bei der Frequenz auf, die dieser Frequenzverschiebung entspricht. Bildet man die Summe aus den für die steigende und die fallende Rampe in Figur 2 erhaltenen Frequenzverschiebungen, so heben sich die laufzeitabhängigen Anteile auf, und man erhält ein Maß für die Relativgeschwindigkeit des Objekts. Bildet man dagegen die Differenz, so heben sich die Doppler-Anteile auf, und man erhält ein Maß für den Abstand des Objekts.

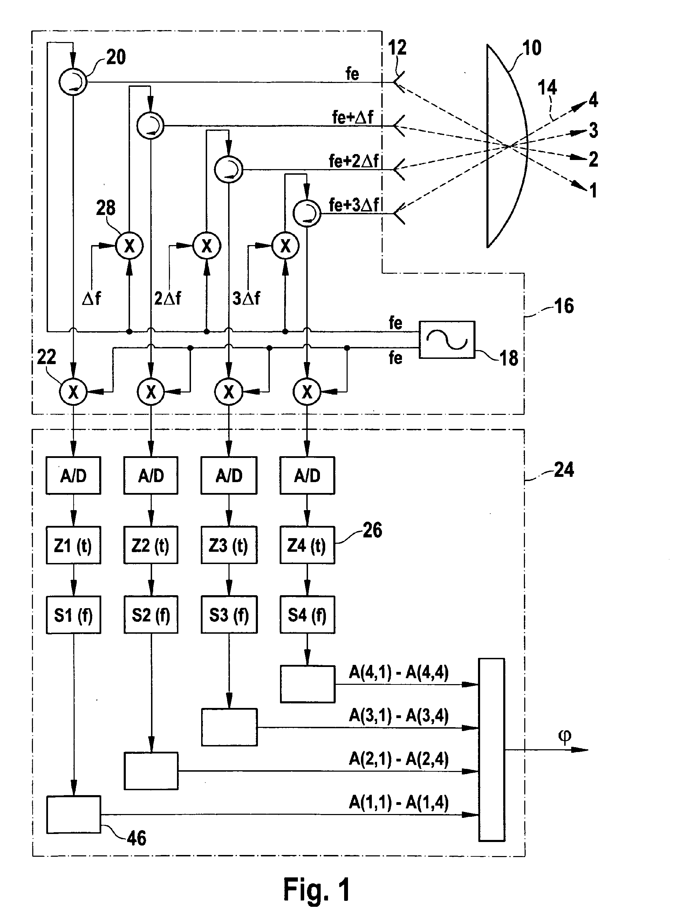

Für die Kanäle 2, 3 und 4 weist das Sende- und Empfangsteil 16 in Figur 1 einen leicht modifizierten Aufbau auf. Hier ist zwischen den Oszillator 18 und den Zirkulator 20 jeweils eine Frequenzverschiebestufe 28 geschaltet, beispielsweise ein Mischer. Dadurch wird die Basisfrequenz fe im Kanal 2 um einen Frequenzversatz Δf heraufgesetzt, im Kanal 3 um 2Δf und im Kanal 4 um 3Δf. Der Frequenzversatz Δf beträgt beispielsweise 1 MHz. Die von den Antennenelementen 12 gesendeten Frequenzen sind demgemäß jeweils um 1 MHz gegeneinander versetzt. Die entsprechenden Frequenzkurven sind in Figur 2 für alle vier Antennenelemente dargestellt.

Dieser Frequenzversatz hat zunächst zur Folge, daß die von den einzelnen Antennenelementen 12 gesendeten Signale frequenzmäßig voneinander entkoppelt sind, so daß die Form der jeweiligen Radarkeulen nicht mehr durch Interferenzen zwischen den einzelnen Antennenelementen 12 beeinflußt wird. Zu solchen Interferenzen kommt es sonst, weil der Abstand zwischen den eizelnen Antennenelementen 12 etwa in der gleichen Größenordnung liegt wie die Wellenlänge λ der gesendeten Mikrowellensignale. Beispielsweise beträgt der Abstand zwischen zwei benachbarten Antennenelementen 12 etwa 0,5 λ.

Wenn, wie bei einem herkömmlichen Radarsensor dieser Art, sämtliche Antennenelemente 12 mit der Basisfrequenz fe angesteuert würden, so erhielte man aufgrund versetzten Anordnung der Antennenelemente und aufgrund der Interferenzeffekte Antennendiagramme von der Form, wie sie vereinfacht in Figur 3 dargestellt sind. Jede der in Figur 3 gezeigten Kurven 30, 32, 34 und 36 ist einem der vier Kanäle des Radarsensors zugeordnet und gibt die Intensität des betreffenden Radarstrahls in Abhängigkeit vom Azimutwinkel ϕ an, in den die Strahlung abgestrahlt wird.

Entsprechend geben die Kurven 30 bis 36 auch die Empfindlichkeit des betreffenden Antennenelements für reflektierte Strahlung an, die aus der dem Azimutwinkel ϕ entsprechenden Richtung empfangen wird.

Man erkennt, daß jede Kurve ein relativ breites Maximum aufweist. Dieses bedeutet, daß die entsprechenden Radarstrahlen 14 zu Radarkeulen aufgeweitet sind. Das Maximum liegt jeweils bei einem anderen Winkel, der durch den Versatz des betreffenden Antennenelements relativ zur optischen Achse gegeben ist. Wie beispielsweise an der fett eingezeichneten Kurve 32 zu erkennen ist, weist jede Radarkeule Nebenkeulen 32a, 32b auf, die durch Interferenzeffekte hervorgerufen werden. Durch diese Nebenkeulen wird die Auswertung der empfangenen Signale bei der Bestimmung des Azimutwinkels des georteten Objekts erschwert.

Figur 4 zeigt schematisch die Form der entsprechenden Antennendiagramme für den Radarsensor gemäß Figur 1. Die Kurven 38-1, 38-2, 38-3 und 38-4 in Figur 4 entsprechen den Kanälen 1 - 4 in Figur 1. Aufgrund der Entkopplung der Sendefrequenzen sind hier die durch Interferenz verursachten Nebenkeulen deutlich unterdrückt.

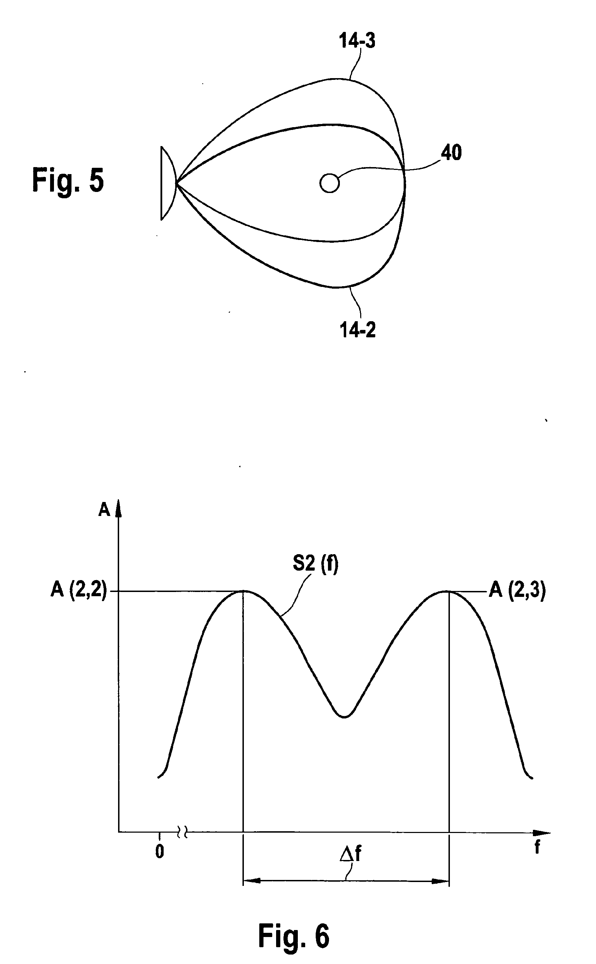

Wie Figur 1 zeigt, wird den Mischern 22 in allen vier Kanälen das vom Oszillator 18 gelieferte Signal mit der Basisfrequenz fe zugeführt. Die Folge ist, daß die Signale in den Spektren S2(f) - S4(f) eine zusätzliche Frequenzverschiebung um Δf, 2Δf bzw. 3Δf aufweisen. Hierdurch wird eine genauere Bestimmung des Azimutwinkels eines georteten Objekts ermöglicht, wie nun anhand der Figuren 5 bis 8 näher erläutert werden soll.

Figur 5 zeigt ein Objekt 40, das den Azimutwinkel ϕ = 0 hat und im Überlappungsbereich zweier Radarkeulen 14-2 und 14-3 liegt, die den Kanälen 2 und 3 in Figur 1 entsprechen.

Figur 6 zeigt das zugehörige Spektrum S2(f) Dieses Spektrum weist zwei deutlich voneinander getrennte Peaks mit komplexen Amplituden A(2,2) und A(2,3) auf (gezeigt sind hier nur die Beträge der komplexen Amplituden). Der Peak bei der kleineren Frequenz, mit der Amplitude A(2,2), resultiert aus dem Signal, das vom Antennenelement des Kanals 2 mit der Frequenz fe+Δf gesendet und dann von demselben Antennenelement wieder empfangen wurde (direktes Echo). Der zweite Peak entspricht dagegen dem Signal, das von dem Antennenelement des Kanals 3 mit der Frequenz fe+2Δf gesendet und dann vom Antennenelement des Kanals 2 empfangen wurde (Kreuzecho). Der Frequenzunterschied zwischen den beiden Peaks beträgt somit Δf. Die Beträge der Amplituden A(2,2) und A(2,3) sind gleich, weil die beiden Radarkeulen 14-2 und 14-2 in Figur 5 symmetrisch zu dem Objekt 40 liegen.

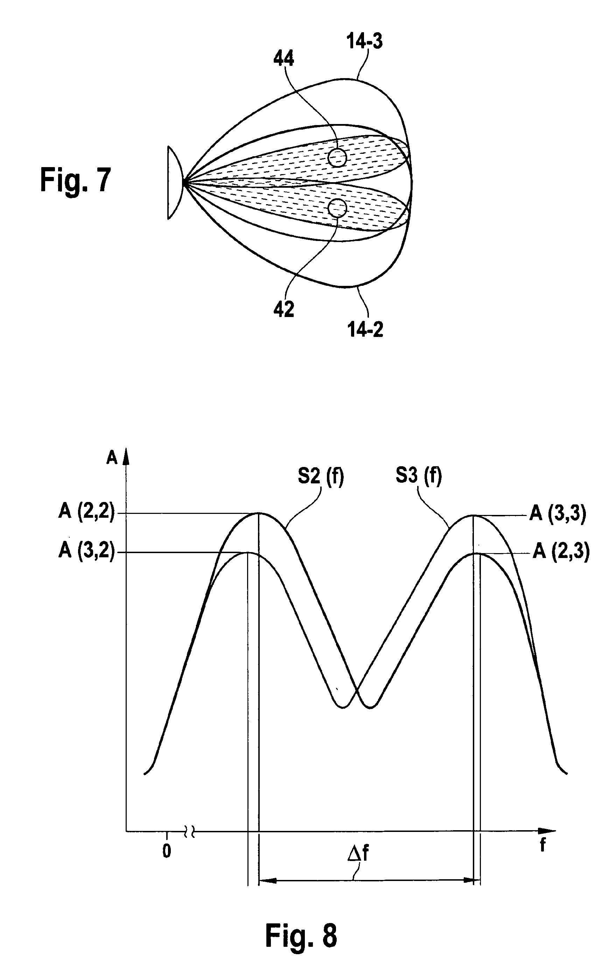

Figur 7 illustriert dagegen eine Situation, in der zwei Objekte 42 und 44 geortet werden, die beide den gleichen Abstand und die gleiche Relativgeschwindigkeit aufweisen, jedoch unterschiedliche Azimutwinkel haben, nämlich ϕ= +3° und ϕ= -3°. Für die Radarkeulen 14-2 und 14-3 sind in Figur 7 schraffiert die jeweiligen Kernbereiche eingezeichnet, in denen die Intensität und die Empfindlichkeit besonders hoch ist. Das Objekt 42 liegt im Kernbereich der Radarkeule 14-2, jedoch außerhalb des Kernbereiches der Radarkeule 14-3. Bei dem Objekt 44 ist es umgekehrt. In Figur 8 sind die zugehörigen Spektren S2(f) und S3(f) dargestellt. Beide Spektren weisen wieder zwei Peaks auf, die um Δf voneinander getrennt sind. Die Amplitude jedes Peaks setzt sich additiv aus zwei Anteilen zusammen, die von den beiden Objekten 42 und 44 herrühren.

Das Objekt 42 wird von dem Radarstrahl des Kanals 2 mit maximaler Stärke getroffen. Die Stärke dieses Radarsignals ist durch die Kurve 38-2 in Figur 4 gegeben, ist also proportional zu einer Größe B, die den Scheitelwert dieser Kurve angibt. Da diese Kurve zugleich auch die Empfindlichkeit des betreffenden Antennenelements angibt, ist die Amplitude des Signals, das am Objekt 42 reflektiert wurde und wieder vom Antennenelement des Kanals 2 empfangen wird, proportional zu B².

Das Objekt 44 wird dagegen von der Radarkeule 14-2 nur mit verminderter Stärke getroffen. Die Signalstärke und die Empfindlichkeit sind durch eine Größe C in Figur 4 gegeben, so daß die Amplitude dieses Anteils gleich C² ist. Für die Gesamtamplitude gilt also (bei Vernachlässigung von Interferezeffekten): A(2,2) = B² + C². Wenn C annähernd 0,6 B ist, erhält man also: A(2,2) = 1,36 B².

Für die Amplitude A(2,3) des Kreuzechos erhält man dagegen aufgrund analoger Überlegungen: A(2,3) = 2 BC = 1,2 B². Deshalb ist in Figur 8 die Amplitude A(2,3) deutlich kleiner als die Amplitude A(2,2). Bei dem Spektrum S3(f) ist es umgekehrt.

So lassen sich also anhand der Spektren die in Figuren 5 und 7 gezeigten Situationen voneinander unterscheiden, obwohl die beiden Objekte 42, 44 den gleichen Abstand und die gleiche Relativgeschwindigkeit haben. Wären die von den Antennenelementen gesendeten Frequenzen dagegen gleich, so fielen beispielsweise im Spektrum S2(f) die beiden Peaks zusammen, und die zugehörigen Amplituden A(2,2) und A(2,3) ließen sich nicht getrennt bestimmen.

Ähnliche Überlegungen, wie sie hier für die Absolutbeträge der Amplituden dargestellt wurden, gelten auch für die zugehörigen Phasen.

Um die in den komplexen Amplituden für die Kreuzechos enthaltene Information auszunutzen, weist der in Figur 1 gezeigte Radarsensor für jeden Kanal einen Analyseblock 46 auf, in dem aus den Spektren die Amplituden der direkten Echos und sämtlicher Kreuzechos bestimmt werden. Beispielsweise weist das Spektrum S1(f) vier Peaks auf, die jeweils um Δf gegeneinander verschoben sind, und die Amplituden A(1,1) - A(1,4) haben. Dabei entspricht A(1,1) dem direkten Echo in diesem Kanal, und A(1, 2) - A(1,4) entsprechen den Kreuzechos mit den drei übrigen Kanälen. Entsprechend erhält man aus den Spektren S2(f), S3(f) und S4(f) die Amplituden A(2,1) - A(2,4), A(3,1) - A(3,4) bzw. A(4,1) - A(4,4). Insgesamt hat man so für jedes geortete Objekt 16 komplexe Amplituden zur Verfügung, die zur Bestimmung des Azimutwinkels ϕ des Objekts herangezogen werden können.

Die Bestimmung des Azimutwinkels kann beispielsweise anhand von Referenz-Antennendiagrammenen erfolgen, die zu dem in Figur 4 gezeigten Satz von Antennendiagrammen analog sind und aus denen sich für jeden Azimutwinkel ϕ die zugehörigen Amplitudenbeträge und Phasen aller direkten Echos sowie aller Kreuzechos ablesen lassen. Dazu werden die gemessenen Amplitudenwerte beispielsweise nach der Methode der kleinsten Abstandsquadrate oder nach dem Maximum-Likelihood-Verfahren an die Antennendiagramme angepaßt, und der Winkel, bei dem sich die beste Anpassung ergibt, ist der gesuchte Azimutwinkel ϕ des Objekts.

Bei mehreren Objekten, die sich, wie die Objekte 42 und 44 in Figur 7 nicht anhand ihrer unterschiedlichen Abstände und/oder Relativgeschwindigkeiten trennen lassen, sind die gesuchten Azimutwinkel diejenigen, bei denen sich für die Summen der Amplitudenwerte beider Objekte die beste Anpassung an die Antennendiagramme ergibt.

Wie in Figuren 6 und 8 angedeutet ist, kann sich der Frequenzbereich, auf dem das Spektrum eines georteten Objekts nichtverschwindende Werte aufweist, je nach Relativgeschwindigkeit auch über den Frequenzwert null hinaus in den negativen Frequenzbereich erstrecken, mit der Folge, daß sich das Spektrum nicht vollständig oder nicht korrekt auswerten läßt. Bei dem hier gezeigten Radarsensor gilt dies jedoch nur für den Kanal 1, da die Spektren in den übrigen Kanälen um mindestens Δf zu positiven Frequenzen verschoben sind. Hierdurch wird die Genauigkeit und Zuverlässigkeit nicht nur bei der Bestimmung des Azimutwinkels sondern auch bei der Messung der Relativgeschwindigkeit und des Abstands verbessert.

Für eine hinreichend genaue Bestimmung des Azimutwinkels werden im allgemeinen nicht alle zur Verfügung stehenden 16 komplexen Amplituden benötigt. Beispielseweise genügt es in dem in Figuren 7 und 8 illustrierten Fall, das Spektrum S2(f) auszuwerten, da das Spektrum S3(f) praktisch keine zusätzliche Information bietet. Figur 9 zeigt ein Beispiel, wie sich unter diesem Gesichtpunkt ein einfacher aufgebauter und kostengünstigerer Radarsensor realisieren läßt.

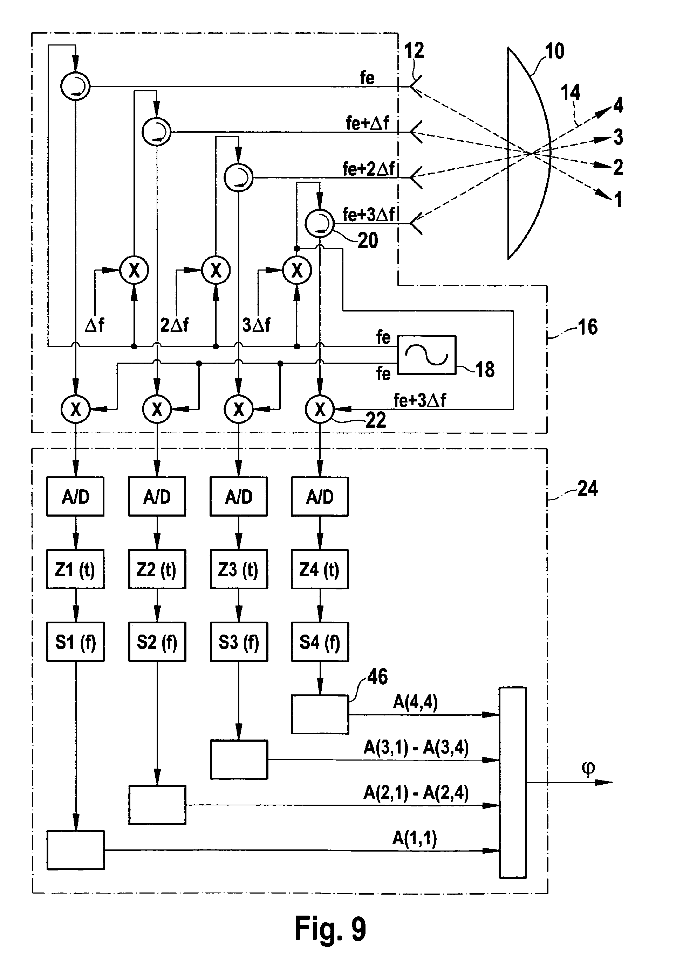

Bei dem Sende- und Empfangsteil 16 des Radarsensors nach Figur 9 haben die Kanäle 2 und 3 den gleichen Aufbau wie in Figur 1. Im Kanal 4 erhält jedoch der Mischer 22 nicht das vom Oszillator 18 gelieferte Signal mit der Basisfrequenz fe, sonderen statt dessen das Signal mit der Frequenz fe+3Δf, das direkt vom Eingang des zugehörigen Zirkulators 20 abgegriffen wird. Somit sind nach wie vor die von den vier Kanälen gesendeten Frequenzen voneinander verschieden, doch ist das Zwischenfrequenzsignal im Kanal 4 wieder auf das Basisband zurücktransformiert, in dem auch das Zwischenfrequenzsignal von Kanal 1 liegt. Folglich liegen die Kreuzechos aus Kanälen 1 bis 3 hier im nicht auswertbaren Frequenzbereich. Demgemäß wird auch im Analyseblock 46 des Kanals 4 nur die dem direkten Echo entsprechende Amplitude A(4,4) extrahiert. Auch im ersten Kanal wird nur die dem direkten Echo entsprechende Amplitude A(1,1) extrahiert. In den Kanälen 2 und 3 stehen aber nach wie vor auch die Kreuzechos aus den Kanälen 1 und 4 zur Verfügung und können somit zur Bestimmung des Azimutwinkels ϕ von Objekten herangezogen werden, die in den beiden Kanälen 3 und 4 bzw. in den beiden Kanälen 1 und 2 geortet werden.

Der wesentliche Vorteil dieser Ausführungsform besteht darin, daß die Analog/Digital-Wandler in den Kanälen 1 und 4 nur eine geringere Bandbreite aufzuweisen brauchen, da sie keine Frequenzen zu verarbeiten brauchen, die um Δf oder ein Vielfaches davon heraufgesetzt wurden. Entsprechend vereinfacht sich auch die Berechnung der Spektren durch Schnelle Fouriertransformation.

Andererseits läßt sich das Ausführungsbeispiel nach Figur 1 auch dahingenend abwandeln, daß auch in Kanal 1 eine Frequenzverschiebestufe 28 vorgesehen wird, die die Frequenz des Oszillators 18 um Δf verschiebt. Die Frequenzverschiebung in den übrigen Kanälen betrüge dann entsprechend 2Δf, 3Δf und 4ΔF. Der Vorteil wäre, daß auch im Kanal 1 die Gefahr geringer wäre, daß Teile des Spektrums im nicht auswertbaren Fequenzbereich liegen.

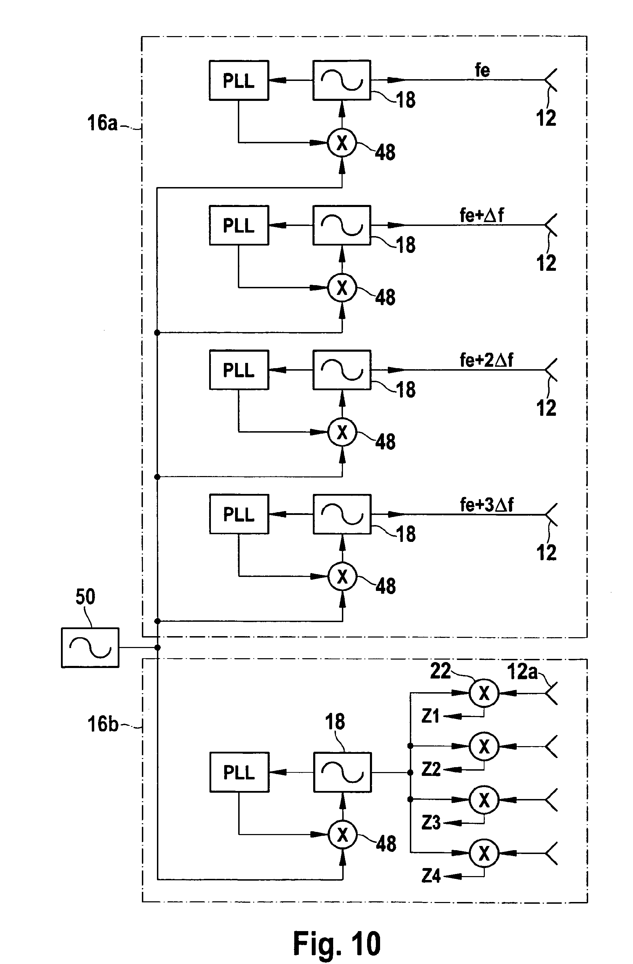

Figur 10 zeigt schließlich ein weiteres Ausführungsbeispiel, bei dem für jedes Antennenelement 12 ein eigener Oszillator 18 vorgesehen ist. Im gezeigten Beispiel wird der Oszillator 18 jedes Kanals durch eine Phasenkopplungsschleife PLL (Phase Locked Loop) phasenstabil geregelt. Die Rückkopplung erfolgt über einen Mischer 48, der von einem allen vier Kanälen gemeinsamen Referenzoszillator 50 (DRO; Dielectric Resonance Oscillator) angesteuert wird. Auf diese Weise werden die Oszillatoren 18 miteinander sychronisiert. Die Frequenzen in allen Kanälen werden in gleicher Weise rampenförmig moduliert, doch ist der Frequenzversatz für jeden Oszillator 18 über die PLL individuell einstellbar.

In diesem Beispiel weist der Radarsensor außerdem ein Sendeteil 16a und ein davon getrenntes Empfangsteil 16b mit eigenen Antennenelementen 12a auf. Den Mischern 22 wird zur Erzeugung der Zwischenfrequenzsignale Z1 - Z4 das Signal eines weiteren geregelten Oszillators 18 zugeführt, der ebenso wie die Oszillatoren 18 des Sendeteils durch den Referenzoszillator 50 synchronisiert wird. Die Auswerteeinrichtung ist in Figur 10 nicht dargestellt und hat den gleichen Aufbau wie in Figur 1.

Es ist auch ein zu Figur 10 analoger Aufbau mit einem kombinierten Sende- und Empfangsteil denkbar, bei dem dieselben Antennenelemente zum Senden und für den Empfang genutzt werden.

## Patentansprüche

1. Radarsensor mit einer Linse (10) und mehreren in der Brennebene der Linse angeordneten Antennenelementen (12; 12a) zum Senden und Empfangen von Radarsignalen, wobei die Antennenelemente (12; 12a) mit unterschiedlichem Versatz zur optischen Achse der Linse (10) angeordnet sind, sodass die von ihnen erzeugten Radarstraheln von der Linse (10) gebündelt und in unterschiedliche Richtungen abgestrahlt werden, einem zugehörigen Sende- und Empfangsteil (16; 16a, 16b), das dazu ausgebildet ist, den Antennenelementen (12) parallel Sendesignale zuzuführen, deren Frequenzen (fe, fe+Δf, fe+2Δf, fe+3Δf) gegeneinander versetzt sind, und ein Zwischenfrequenzsignal für jeden Kanal zu bilden, indem es das von dem betreffenden Antennenelement empfangene Signal mit einem Basissignal mischt, und mit einer Auswerteeinrichtung (24), **dadurch gekennzeichnet, daß** die Auswerteeinrichtung (24) dazu ausgebildet ist, Azimutwinkel (ϕ) von georteten Objekten (42, 44) anhand einer Beziehung zwischen den von verschiedenen Antennenelementen empfangenen Signalen zu bestimmen und dabei anhand des Frequenzversatzes (Δf) zwischen Signalen zu unterscheiden, die von verschiedenen Antennenelementen (12) gesendet wurden, das Basissignal eine Frequenz hat, die höchstens gleich der kleinsten der den verschiedenen Antennenelementen zugeführten Sendefrequenzen ist, und daß für mindestens eines der Antennenelemente (12) der Frequenzversatz (Δf) so groß ist, daß das Spektrum (S1(f), S2(f), S3(f), S4(f)) des Zwischenfrequenzsignals für alle georteten Objekte, unabhängig von deren Relativgeschwindigkeit, im positiven Frequenzbereich liegt.

2. Radarsensor nach Anspruch 1, **dadurch gekennzeichnet, daß** er als FMCW-Radar ausgebildet ist.

3. Radarsensor nach Anspruch 1 oder 2, **dadurch gekennzeichnet, daß** die in Anspruch 1 genannte Bedingung für die Größe des Frequenzversatzes (Δf) für alle Antennenelemente (12) erfüllt ist.

4. Radarsensor nach einem der vorstehenden Ansprüche, **dadurch gekennzeichnet, daß** jedem sendenden Antennenelement (12) ein eigener Oszillator (18) zur Erzeugung des Sendesignals zugeordnet ist.

5. Radarsensor nach einem der vorstehenden Ansprüche, **dadurch gekennzeichnet, daß** die Auswerteeinrichtung (24) zum Digitalisieren der empfangenen Signale Analog/Digital-Wandler (A/D) aufweist, die jeweils einem der empfangenden Antennenelemente (12) zugeordnet sind und sich in ihrer Bandbreite unterscheiden, und daß die Auswerteeinrichtung (24) dazu ausgebildet ist, die Unterscheidung anhand des Frequenzversatzes (Δf) nur für diejenigen digitalisierten Signale vorzunehmen, die mit größerer Bandbreite digitalisiert wurden.

## Claims

1. Radar sensor having a lens (10) and a plurality of antenna elements (12; 12a), arranged in the focal plane of the lens, for sending and receiving radar signals, wherein the antenna elements (12; 12a) are arranged with a different offset with respect to the optical axis of the lens (10), with the result that the radar beams which they produce are bundled by the lens (10) and radiated in different directions, an associated transmission and reception part (16; 16a, 16b) which is designed to supply the antenna elements (12) with transmission signals in parallel, the frequencies (fe, fe+Δf, fe+2Δf, fe+3Δf) of which are offset from one another, and to form an intermediate frequency signal for each channel by mixing the signal received from the relevant antenna element with a base signal, and having an evaluation device (24), **characterized in that** the evaluation device (24) is designed to determine angles of azimuth (Ψ) for located objects (42, 44) using a relationship between the signals received from various antenna elements and in so doing to use the frequency offset (Δf) to distinguish between signals which have been sent by various antenna elements (12), the base signal has a frequency which is no more than equal to the lowest of the transmission frequencies supplied to the various antenna elements, and **in that** for at least one of the antenna elements (12) the frequency offset (Δf) is so large that the spectrum (S1(f), S2(f), S3(f), S4(f)) of the intermediate frequency signal is in the positive frequency range for all located objects, irrespective of the relative speed thereof.

2. Radar sensor according to Claim 1, **characterized in that** it is in the form of an FMCW radar.

3. Radar sensor according to Claim 1 or 2, **characterized in that** the condition cited in Claim 1 for the magnitude of the frequency offset (Δf) is satisfied for all the antenna elements (12).

4. Radar sensor according to one of the preceding claims, **characterized in that** each sending antenna element (12) has an associated dedicated oscillator (18) for producing the transmission signal.

5. Radar sensor according to one of the preceding claims, **characterized in that** the evaluation device (24) has, for the purpose of digitizing the received signals, analogue/digital converters (A/D) which are each associated with one of the receiving antenna elements (12) and differ in terms of their bandwidth, and **in that** the evaluation device (24) is designed to make the distinction using the frequency offset (Δf) only for those digitized signals which have been digitized with a relatively large bandwidth.

## Revendications

1. Détecteur radar comprenant une lentille (10) et plusieurs éléments d'antenne (12 ; 12a) disposés dans le plan focal de la lentille pour émettre et recevoir des signaux radar, les éléments d'antenne (12 ; 12a) étant disposés avec un décalage différent par rapport à l'axe optique de la lentille (10) de sorte que les rayons radar qu'ils génèrent soient concentrés par la lentille (10) et soient rayonnés dans différentes directions, une partie d'émission et de réception (16 ; 16a, 16b) associée qui est configurée pour acheminer parallèlement aux éléments d'antenne (12) des signaux d'émission dont les fréquences (fe, fe+Δf, fe+2Δf, fe+3Δf) sont décalées les unes par rapport aux autres, et pour former un signal de fréquence intermédiaire pour chaque canal en mélangeant le signal reçu par l'élément d'antenne concerné avec un signal de base, et comprenant un dispositif d'interprétation (24), **caractérisé en ce que** le dispositif d'interprétation (24) est configuré pour déterminer l'angle d'azimut (ϕ) d'objets (42, 44) localisés au moyen d'une relation entre les signaux reçus par les différents éléments d'antenne et faire ici la différence au moyen du décalage en fréquence (Δf) entre les signaux qui ont été émis par des éléments d'antenne (12) différents, **en ce que** le signal de base possède une fréquence qui est au maximum égale à la plus petite des fréquences d'émission acheminées aux différents éléments d'antenne, et **en ce que** le décalage en fréquence (Δf) pour au moins l'un des éléments d'antenne (12) est important au point que le spectre (S1(f), S2(f), S3(f), S4(f)) du signal de fréquence intermédiaire pour tous les objets localisés, indépendamment de leur vitesse relative, se trouve dans la plage de fréquences positive.

2. Détecteur radar selon la revendication 1, **caractérisé en ce qu'**il est réalisé sous la forme d'un radar FMCW.

3. Détecteur radar selon la revendication 1 ou 2, **caractérisé en ce que** la condition mentionnée dans la revendication concernant l'importance du décalage en fréquence (Δf) est satisfaite pour tous les éléments d'antenne (12).

4. Détecteur radar selon l'une des revendications précédentes, **caractérisé en ce qu'**un oscillateur (18) propre est associé à chaque élément d'antenne d'émission (12) pour générer le signal d'émission.

5. Détecteur radar selon l'une des revendications précédentes, **caractérisé en ce que** le dispositif d'interprétation (24) présente des convertisseurs analogique/numérique (A/N) pour la numérisation des signaux reçus, lesquels sont respectivement associés à l'un des éléments d'antenne de réception (12) et se différentient dans leur largeur de bande, et **en ce que** le dispositif d'interprétation (24) est configuré pour effectuer la différentiation au moyen du décalage en fréquence (Δf) uniquement pour les signaux numérisés qui ont été numérisés avec la largeur de bande la plus grande.
